# EUROPEAN PATENT APPLICATION

(11) **EP 4 372 568 A1**
(43) Date of publication of application: **22.05.2024**
(21) Application number: 23205445.2
(22) Date of filing: 24.10.2023
(51) Int. Cl.: G06F 12/14, G06F 12/084

(54) **NEAR STORAGE COMPUTATION SYSTEM AND METHODS FOR DATA PROTECTION**

(30) Priority: 01.11.2022 US 202263421476 P; 20.01.2023 US 202318157553
(71) Applicant: Samsung Electronics Co., Ltd., Suwon-si, Gyeonggi-do 16677 (KR)
(72) Inventor: RAMANATHAN, Madhava Krishnan, San Jose, CA 95134 (US); BIKONDA, Naga Sanjana, San Jose, CA 95134 (US); JAIN, Shashwat, San Jose, CA 95134 (US); MARAM, Vishwanath, San Jose, CA 95134 (US)
(74) Representative: Kuhnen & Wacker Patent- und Rechtsanwaltsbüro PartG mbB

(57) **Abstract**

Systems and methods for data protection. In some embodiments, a computational storage device includes a controller circuit, a first compute function of a first application, a second compute function of the first application, a common memory area; and a persistent storage device. The controller circuit may be configured: to receive a first request from a host, the first request defining a first allocated function data memory region, for the first compute function; to receive a first memory access request, from the first compute function, for a first memory location in the common memory area and outside the first allocated function data memory region; and to deny the first memory access request.

## Description

### FIELD

One or more aspects of embodiments according to the present disclosure relate to computational storage, and more particularly to systems and methods for data protection.

### BACKGROUND

Computational storage devices may include persistent storage and may perform computations near the persistent storage. The results of such computations may be stored in the persistent storage. In some implementations, multiple computational storage devices may be connected to a single host. A computational storage device may execute a plurality of compute functions, that access, or have access to, a common memory area.

It is with respect to this general technical environment that aspects of the present disclosure are related.

### SUMMARY

According to an embodiment of the present disclosure, there is provided a computational storage device, including: a controller circuit; a first compute function of a first application; a second compute function of the first application; a common memory area; and a persistent storage device, the controller circuit being configured: to receive a first request from a host, the first request defining a first allocated function data memory region, for the first compute function; to receive a first memory access request, from the first compute function, for a first memory location in the common memory area and outside the first allocated function data memory region; and to deny the first memory access request.

In some embodiments: the first allocated function data memory region is for read operations; and the first memory access request is a read access request.

In some embodiments, the first request further defines a second allocated function data memory region, for the first compute function, for write operations.

In some embodiments, the controller circuit is configured: to receive a second memory access request, from the first compute function, for a second memory location in the common memory area and outside the first allocated function data memory region; and to approve the second memory access request.

In some embodiments: the second memory access request is a write access request, and the second memory location is within the second allocated function data memory region.

In some embodiments: the first request further defines a third allocated function data memory region, for the second compute function, for read operations; and the third allocated function data memory region overlaps the second allocated function data memory region in an overlapping portion of the third allocated function data memory region.

In some embodiments, the controller circuit is further configured: to receive a third memory access request, from the first compute function, for a third memory location in the overlapping portion of the third allocated function data memory region; and to approve the third memory access request, wherein the third memory access request is a write access request.

In some embodiments, the controller circuit is further configured: to receive a fourth memory access request, from the second compute function, for a fourth memory location in the overlapping portion of the third allocated function data memory region; and to approve the fourth memory access request, wherein the fourth memory access request is a read access request.

In some embodiments, the controller circuit is further configured: to receive a fifth memory access request, from the second compute function, for a fifth memory location in the overlapping portion of the third allocated function data memory region; and to deny the fifth memory access request, wherein the fifth memory access request is a write access request.

In some embodiments, the controller circuit is configured to maintain a table of access permissions, the table including read and write access permissions for the first compute function.

In some embodiments, the controller circuit is further configured to receive an identifying tag from the host, and to acknowledge receipt of the identifying tag.

In some embodiments, the controller circuit is further configured: to compare a subset of a plurality of bits of a logical block address of the first request to the identifying tag; and to determine that the subset of the plurality of bits matches the identifying tag.

In some embodiments, the controller circuit is further configured: to receive a second request from the host; to compare a subset of a plurality of bits of a logical block address of the second request to the identifying tag; to determine that the subset of the plurality of bits does not match the identifying tag; and to return an error code to the host.

According to an embodiment of the present disclosure, there is provided a method, including: receiving, by a computational storage device, a first request from a host, the first request defining a first allocated function data memory region, for a first compute function of a first application of the computational storage device, the first application including the first compute function and a second compute function; receiving, by a controller circuit of the computational storage device, a first memory access request, from the first compute function, for a first memory location in a common memory area of the computational storage device and outside the first allocated function data memory region; and denying the first memory access request.

In some embodiments: the first allocated function data memory region is for read operations; and the first memory access request is a read access request.

In some embodiments, the first request further defines a second allocated function data memory region, for the first compute function, for write operations.

In some embodiments, the method further includes: receiving a second memory access request, from the first compute function, for a second memory location in the common memory area and outside the first allocated function data memory region; and approving the second memory access request.

In some embodiments: the second memory access request is a write access request, and the second memory location is within the second allocated function data memory region.

In some embodiments: the first request further defines a third allocated function data memory region, for the second compute function, for read operations; and the third allocated function data memory region overlaps the second allocated function data memory region in an overlapping portion of the third allocated function data memory region.

According to an embodiment of the present disclosure, there is provided a computational storage device, including: means for processing; a first compute function of a first application; a second compute function of the first application; a common memory area; and a persistent storage device, the means for processing being configured: to receive a first request from a host, the first request defining a first allocated function data memory region, for the first compute function; to receive a first memory access request, from the first compute function, for a first memory location in the common memory area and outside the first allocated function data memory region; and to deny the first memory access request.

### BRIEF DESCRIPTION OF THE DRAWINGS

These and other features and advantages of the present disclosure will be appreciated and understood with reference to the specification, claims, and appended drawings wherein:
FIG. 1 is a block diagram of a computational storage device, according to an embodiment of the present disclosure;
FIG. 2A is a block diagram of a host application interacting with a plurality of computational storage devices, according to an embodiment of the present disclosure;
FIG. 2B is a bit allocation diagram, according to an embodiment of the present disclosure;
FIG. 2C is an operational diagram for a computing system, according to an embodiment of the present disclosure;
FIG. 3A is a diagram of a common memory area and a plurality of compute functions, according to an embodiment of the present disclosure;
FIG. 3B is an operational diagram for a computing system, according to an embodiment of the present disclosure; and
FIG. 4 is a flow chart of a method, according to an embodiment of the present disclosure.

### DETAILED DESCRIPTION

The detailed description set forth below in connection with the appended drawings is intended as a description of exemplary embodiments of systems and methods for data protection provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

In a computing system in which a host is connected to a plurality of computational storage devices, a risk may exist that erroneous or malicious code may cause a request (e.g., a read request or a write request) to be sent to the wrong one of the computational storage devices. In some embodiments, this risk may be mitigated by assigning to each computational storage device an identifier at startup, communicating the respective identifier to each of the computational storage devices, and including the identifier in the logical block address portion of any requests subsequently sent to the computational storage device (e.g., within bits of the logical block address that are unused, and reserved for future use). Each computational storage device may then be configured to process each request it receives only if the unique identifier in the request matches its identifier.

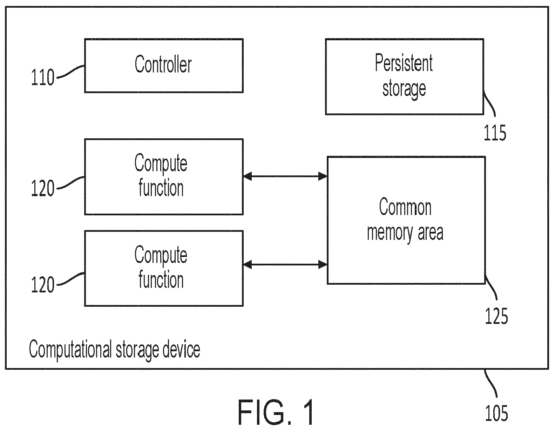

FIG. 1 is a block diagram of a computational storage device 105. The computational storage device 105 includes a controller (or controller circuit) 110, persistent storage 115, one or more compute functions 120 (or compute functions), and a common memory area 125. As used herein, a "compute function" is (i) a circuit, or (ii) a combination of hardware (e.g., a processing circuit) and software or firmware in a computational storage device 105 that enables the computational storage device 105 to perform a computation. As such, a compute function may be a circuit for performing the computation or a combination of a general purpose processing circuit and instructions (e.g., software or firmware), the processing circuit being configured to read the instructions from memory and to execute the instructions to perform the computation. A computational storage device 105 may include a plurality of compute functions (e.g., a plurality of circuits for performing computations, or a single processing circuit combined with a plurality of sets of instructions, for performing computations). Compute functions in a computational storage device may share a memory region that may be referred to as the common memory area, and errors in accessing the common memory area may make it possible for one compute function to interfere with the memory of another compute function. As such, in some embodiments, a registration module may store metadata specifying which regions of the compute function 120 each compute function 120 is permitted to read from, and which regions of the compute function 120 each compute function 120 is permitted to write to. Any attempt, by a compute function, to perform a read or write operation that is not permitted may then be blocked by a memory management module, which may be implemented as a firmware module running on the controller 110.

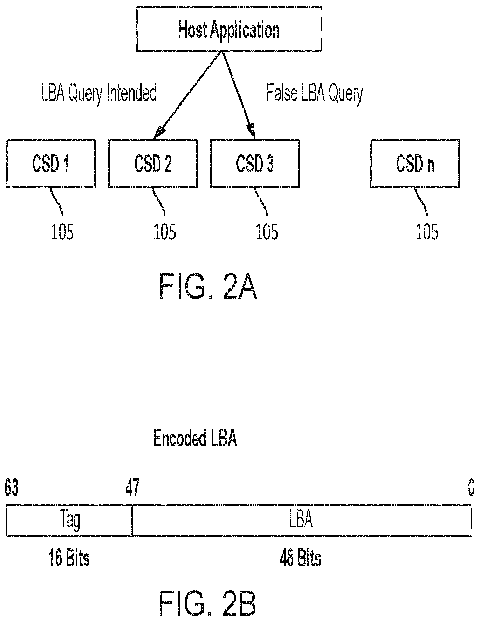

FIG. 2A shows a host application interacting with a plurality of computational storage devices 105. In part because of the complexity of a host application that is capable of taking advantage of computational storage devices 105, the risk of errors in the code of such an application may be significant. Such an error may, for example, result in the sending of a request, referring to a particular logical block address (LBA), to the wrong computational storage device 105 (in FIG. 2A, this is illustrated as an incorrect query ("False LBA Query") being sent to CSD3 instead of the correct query ("LBA Query Intended") being sent to CSD2).

FIG. 2B is a bit allocation diagram of a 64-bit logical block address. The logical block address is an eight-byte address used to map the device memory. The operating system (e.g., the host operating system) may use only up to the lower 48 bits (e.g., the 48 least significant bits) of this eight-byte address; the upper (most significant) 16 bits may be unused (e.g., reserved for future use), and, in some embodiments, may be encoded for various uses. For example, to help ensure that the host application accesses only the correct computational storage device 105, the upper part of each logical block address may be tagged, e.g., set to a unique set of tags bits corresponding to the drive the logical block address is associated with. This encoded logical block address may then serve as verification metadata at the device level, when the request is transferred to the computational storage device 105. Before allowing access to the logical block address identified by the lower (least significant) 48 bits of the logical block address, the computational storage device 105 may verify that the requested logical block address tag bits match its own unique identifier and only process the request if there is a match. If there is no match, the computational storage device 105 may return an appropriate error code to the host.

At startup of the application (or at startup of the device or of the host), the host may initially discover all of the computational storage devices 105 available for use (e.g., using a suitable command that will cause each device to report its presence, or as a result of each device's registering with the host at startup) and assign to each of them a unique tag. Unique tags may be reassigned upon restarting of an application or restarting of the host. A separate request may then be issued to each of the computational storage devices 105 to make each computational storage device 105 aware of the unique tag assigned to it by the host. An application programming interface (API) (which may be referred to as a "tagging API") may be employed to generate the unique tags, and it may maintain a table of device names and the corresponding unique tags.

After each of the computational storage devices 105 has been assigned a unique tag, when an application running on the host generates any request (e.g., a read request, a write request, or a request to perform processing in the computational storage device 105) targeting a logical block address, the application may call the tagging API to get the unique tag corresponding to the computational storage device 105 to which the request is to be sent, and the application may include the unique tag as an argument to a function call to a driver API (or simply "driver") for the computational storage device 105. The driver API may insert the unique 16-bit tag of the destination computational storage device 105 in the upper 16 bits of the logical block address, to form a modified logical block address, which may be referred to as an encoded logical block address. The request, including the encoded logical block address, may then be sent to the next layer of a stack of the driver API for the computational storage device 105. In some embodiments, the tag may be added to the call at other points in the process. The encoded logical block address may then be verified within the computational storage device 105, against the tag associated with the computational storage device 105, and in the event of a discrepancy the computational storage device 105 may decline to comply with the request. The driver may also check for discrepancies, in an analogous manner, at each layer of the driver stack.

In a system employing such an encoding and verification method, the effects of certain types of errors, which otherwise could have relatively severe consequences including, e.g., data loss, may be mitigated. For example if a programming error (or malicious content) in the driver causes a write operation to be sent to the wrong computational storage device 105, the consequences of this error may be limited to the failure of the write request (which may be reported back to the host by the affected computational storage device 105, allowing the host application to take remedial action). In the absence of the protection provided by the tagging system described herein, the sending of a write request to the wrong computational storage device 105 may instead result in potentially costly destruction of saved data.

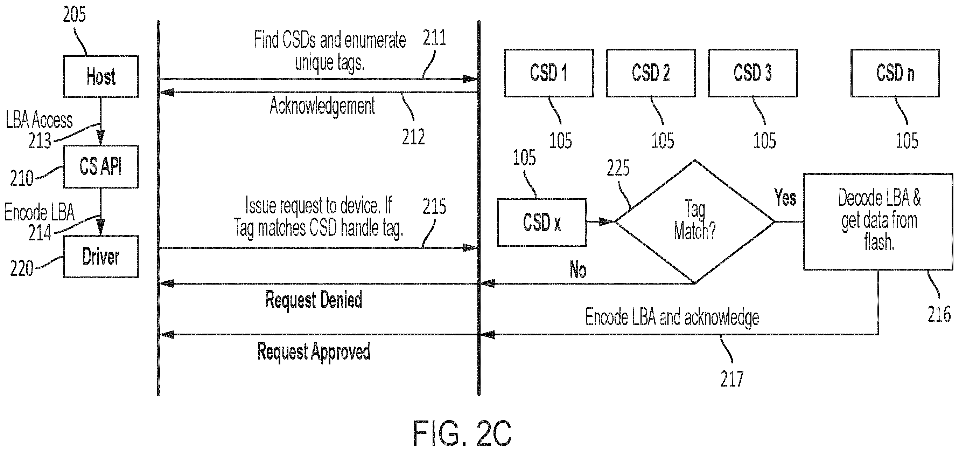

FIG. 2C is a process illustration depicting the interaction of a host 205 with a computational storage device 105, for the processing of a read request. At 211, the host finds the computational storage devices 105 and assigns each a unique tag, and at 212, the computational storage devices 105 send respective acknowledgments to the host 205. At 213, the host 205 (e.g., an application running in the host) generates a request (e.g., a read request, a write request, or a request to perform processing in the computational storage device 105), and calls, at 213, a suitable function of the application programming interface (API) 210, which calls, at 214, a function of the driver 220. The driver 220 then issues, at 215, a request to the computational storage device 105 (e.g., CSD x) identified by the driver as the appropriate target computational storage device 105 for the request. The computational storage device 105 then determines, at 225, whether the tag that is part of the logical block address matches the tag it was assigned at startup. If it does not, the computational storage device 105 sends an error code back to the host indicating that the request has been denied; if it does, then the computational storage device 105 decodes, at 216, the logical block address (e.g., it extracts, from the 64-bit logical block address, the least significant 48 bits), and retrieves the data stored at that location in the persistent storage (e.g., in the flash memory). It may then encode the logical block address (e.g., it may add the 16-bit tag back to the least significant 48 bits) and return, at 217, an acknowledgement (including the data read from persistent storage) to the host 205.

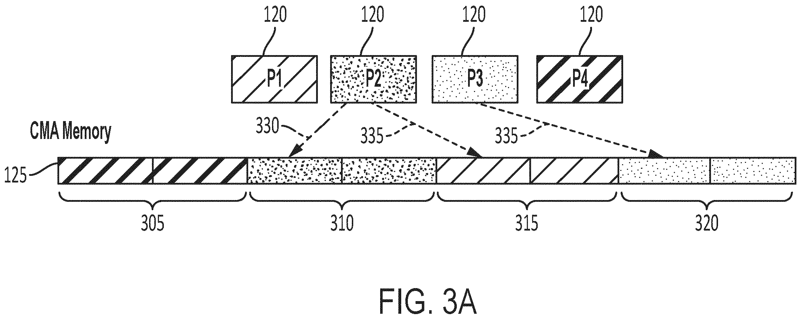

FIG. 3A shows four different computational storage functions (or compute functions, or compute functions) 120, labeled P1, P2, P3, and P4 respectively, interacting with a shared common memory area 125. Different portions of the common memory area 125 are allocated respectively to different to compute functions 120, with a first portion 305 being allocated to P4, a second portion 310 being allocated to P2, a third portion 315 being allocated to P1, and a fourth portion 320 being allocated to P3. If no mechanism is present constraining the access of any one of the compute functions 120 within the common memory area 125, then any compute function 120 may perform proper accesses (within the portion of the common memory area 125 allocated to it) and improper accesses (not within the portion of the common memory area 125 allocated to it). FIG. 3A shows an example of a proper access 330 (by P2, within the second portion 310 of the common memory area 125) and two improper accesses 335 (by P2, within the third portion 315 of the common memory area 125, and by P3, within the fourth portion 320 of the common memory area 125). Each of the portions of the common memory area 125 allocated to a respective compute function 120 may be referred to as an allocated function data memory (AFDM) region, or as an allocated function data memory buffer. An improper access by one compute function 120 may interfere with the computations of another compute function 120.

An application running on the host 205 may use computational storage devices by batching multiple compute function pipelines based on the resource availability for execution. The compute functions 120 may have allocated function data memory buffers associated with them in the common memory area 125; the allocated function data memory buffers may be allocated by the host application. These buffers may be used by the compute function for internal processing and storage.

In some embodiments, isolation between the compute functions 120 may be provided, to prevent improper accesses to the common memory area 125. Metadata at the level of memory pages may be used as part of a system and method to provide such isolation. In such an embodiment, the host application may send the context for each compute request along with the allocated function data memory buffer associated with it. The access permissions may also be sent as a metadata along with the context (the context being a payload that the host may send to the computational storage device 105 along with a batch request). A batch request may be a single command instructing the computational storage device 105 to perform certain operations for a plurality of data sets, or to perform a plurality of operations on a single data set. The computational storage device 105 may maintain page-specific metadata to track read and write permissions separately for different compute functions 120 for different pages. This metadata may be maintained at different granularities.

For example, each computational storage device 105 may maintain metadata for the pages in the common memory area 125, the metadata specifying (i) which compute function 120 has read permission to which regions (e.g., which allocated function data memory buffers) of the common memory area 125 and (ii) which compute function 120 has write permission to which regions (e.g., to which allocated function data memory buffers) of the common memory area 125. Each compute functions (or, equivalently, each function slot (discussed in further detail below)) may have its own set of permissions. The host application may be aware of the access permissions that the compute functions 120 will need, when the application prepares the context for a request (e.g., a request to perform processing in the computational storage device 105). The access permission information may then be passed to the computational storage device 105 along with the remainder of the context for the request to the computational storage device. The access permission information for the request may be received by a registration module in the computational storage device 105, and the registration module may update the permissions in the metadata stored in the computational storage device 105. The registration module may be firmware executed by the controller 110 of the computational storage device 105, which maintains and enforces the access permissions specifying which compute function 120 may access which portions (e.g., which allocated function data memory buffers) of the common memory area 125. The registration module may implement a policy specifying that by default each compute function 120 does not have access to any of the common memory area 125, so that a compute function 120 is permitted, by the registration module, to access the common memory area 125 only if it is explicitly granted access by the host request context.

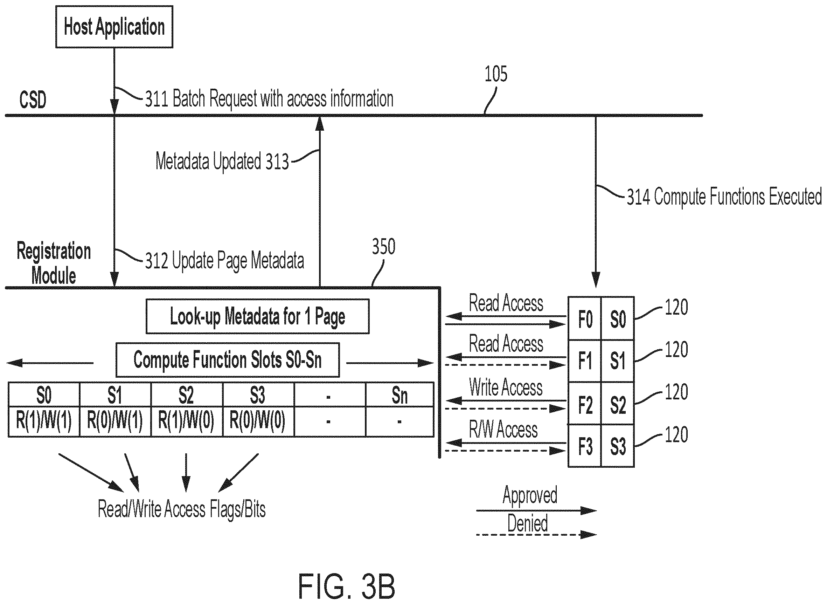

In FIG. 3B, F0, F1, F2, and F3 are the compute functions running on slots S0, S1, S2, and S3 respectively. When a running compute function 120 or kernel requests access to a region of the common memory area 125, the request may be processed by the registration module 350, which may look up the metadata access bits corresponding to the function slot and the requested memory page or pages. If the access bits specify that the requested operation should be permitted, then the registration module 350 may process the request; otherwise the request may be blocked and kernel execution may be halted. Such a process may ensure that no compute function 120 is allowed to access a memory region that is not within its access scope. In some embodiments, the protection provided may be both protection against programming errors and against malicious code. In some embodiments, a slot may store an application including several compute functions; in such an embodiment, the process described above may prevent interference between any two compute functions, regardless of whether or not they are both included in the same application.

For example, in the example of FIG. 3B, one row of an access permission table used to store metadata is shown. The row shows access permissions, for one page of the common memory area 125, for each of the n compute function slots S0, S1, S2, S3, ... n. This information may be stored in the table using two bits per compute function 120 (one bit for read permission and one bit for write permission). The contents of the row illustrated are "R(1)/W(1)" for S0, which means that compute function slot S0 has both read and write access to the page corresponding to the row shown. Similarly, the row shows that S1 has write access but not read access to the page, S2 has read access but not write access, and S3 has neither read access nor write access. FIG. 3B further shows examples of read and write requests made by the compute functions 120, and the handling of such requests. For example, the compute function running on slot 0 submits a read request, which is granted (because, according to the illustrated row of the page access table, slot S0 has read permission for the page). Similarly, a read request by the compute function in slot S1, a write request by the compute function in slot S2, and a read and write (R/W) request by the compute function in slot S3 are all denied, based on the metadata stored in the illustrated row of the table. Any page in the common memory area 125 for which a first compute function 120 has write access and a second compute function 120 has read access may be used for data transfer between the two compute functions 120; for example, the first compute function 120 may store the result of a first operation in such a page, and the second compute function 120 may then use the result as input for a subsequent operation. In operation, the host application may send, at 311, a batch request with access information; the registration module 350 may update, at 312, the page metadata; the registration module 350 may acknowledge, at 313, to an upper level firmware module, that the page metadata has been updated; and the compute functions may be executed, at 314.

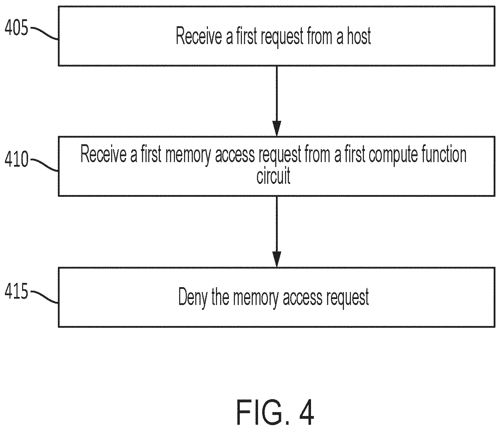

FIG. 4 is a flowchart of a method, in some embodiments. The method includes, receiving, at 405, by a computational storage device, a first request from a host, the first request defining a first allocated function data memory region, for a first compute function of the computational storage device; receiving, at 410, by a controller circuit of the computational storage device, a first memory access request, from the first compute function, for a first memory location in a common memory area of the computational storage device and outside the first allocated function data memory region; and denying, at 415, the first memory access request.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Some embodiments may include features of the following numbered statements.
1. A computational storage device, comprising:
   a controller circuit;
   a first compute function of a first application;
   a second compute function of the first application;
   a common memory area; and
   a persistent storage device,
   the controller circuit being configured:
      to receive a first request from a host, the first request defining a first allocated function data memory region, for the first compute function;
      to receive a first memory access request, from the first compute function, for a first memory location in the common memory area and outside the first allocated function data memory region; and
      to deny the first memory access request.
2. The computational storage device of statement 1, wherein:
   the first allocated function data memory region is for read operations; and
   the first memory access request is a read access request.
3. The computational storage device of statement 1 or statement 2, wherein the first request further defines a second allocated function data memory region, for the first compute function, for write operations.
4. The computational storage device of statement 3, wherein the controller circuit is configured:
   to receive a second memory access request, from the first compute function, for a second memory location in the common memory area and outside the first allocated function data memory region; and
   to approve the second memory access request.
5. The computational storage device of statement 4, wherein:
   the second memory access request is a write access request, and
   the second memory location is within the second allocated function data memory region.
6. The computational storage device of statement 5, wherein:
   the first request further defines a third allocated function data memory region, for the second compute function, for read operations; and
   the third allocated function data memory region overlaps the second allocated function data memory region in an overlapping portion of the third allocated function data memory region.
7. The computational storage device of statement 6, wherein the controller circuit is further configured:
   to receive a third memory access request, from the first compute function, for a third memory location in the overlapping portion of the third allocated function data memory region; and
   to approve the third memory access request,
   wherein the third memory access request is a write access request.
8. The computational storage device of statement 6 or statement 7, wherein the controller circuit is further configured:
   to receive a fourth memory access request, from the second compute function, for a fourth memory location in the overlapping portion of the third allocated function data memory region; and
   to approve the fourth memory access request,
   wherein the fourth memory access request is a read access request.
9. The computational storage device of any one of statements 6 to 8,
   wherein the controller circuit is further configured:
   to receive a fifth memory access request, from the second compute function, for a fifth memory location in the overlapping portion of the third allocated function data memory region; and
   to deny the fifth memory access request,
   wherein the fifth memory access request is a write access request.
10. The computational storage device of any one of the preceding statements, wherein the controller circuit is configured to maintain a table of access permissions, the table including read and write access permissions for the first compute function.
11. The computational storage device of any one of the preceding statements, wherein the controller circuit is further configured to receive an identifying tag from the host, and to acknowledge receipt of the identifying tag.
12. The computational storage device of statement 11, wherein the controller circuit is further configured:
   to compare a subset of a plurality of bits of a logical block address of the first request to the identifying tag; and
   to determine that the subset of the plurality of bits matches the identifying tag.
13. The computational storage device of statement 11 or statement 12,
   wherein the controller circuit is further configured:
   to receive a second request from the host;
   to compare a subset of a plurality of bits of a logical block address of the second request to the identifying tag;
   to determine that the subset of the plurality of bits does not match the identifying tag; and
   to return an error code to the host.
14. A method, comprising:
   receiving, by a computational storage device, a first request from a host, the first request defining a first allocated function data memory region, for a first compute function of a first application of the computational storage device, the first application comprising the first compute function and a second compute function;
   receiving, by a controller circuit of the computational storage device, a first memory access request, from the first compute function, for a first memory location in a common memory area of the computational storage device and outside the first allocated function data memory region; and
   denying the first memory access request.
15. The method of statement 14, wherein:
   the first allocated function data memory region is for read operations; and
   the first memory access request is a read access request.
16. The method of statement 14 or statement 15, wherein the first request further defines a second allocated function data memory region, for the first compute function, for write operations.
17. The method of statement 16, further comprising:
   receiving a second memory access request, from the first compute function, for a second memory location in the common memory area and outside the first allocated function data memory region; and
   approving the second memory access request.
18. The method of statement 17, wherein:
   the second memory access request is a write access request, and
   the second memory location is within the second allocated function data memory region.
19. The method of statement 18, wherein:
   the first request further defines a third allocated function data memory region, for the second compute function, for read operations; and
   the third allocated function data memory region overlaps the second allocated function data memory region in an overlapping portion of the third allocated function data memory region.
20. A computational storage device, comprising:
   means for processing;
   a first compute function of a first application;
   a second compute function of the first application;
   a common memory area; and
   a persistent storage device,
   the means for processing being configured:
      to receive a first request from a host, the first request defining a first allocated function data memory region, for the first compute function;
      to receive a first memory access request, from the first compute function, for a first memory location in the common memory area and outside the first allocated function data memory region; and
      to deny the first memory access request.

Although exemplary embodiments of systems and methods for data protection have been specifically described and illustrated herein, many modifications and variations will be apparent to those skilled in the art. Accordingly, it is to be understood that systems and methods for data protection constructed according to principles of this disclosure may be embodied other than as specifically described herein. The invention is also defined in the following claims.

## Claims

1. A computational storage device, comprising:
a controller circuit;
a first compute function of a first application;
a second compute function of the first application;
a common memory area; and
a persistent storage device,
the controller circuit being configured:
to receive a first request from a host, the first request defining a first allocated function data memory region, for the first compute function;
to receive a first memory access request, from the first compute function, for a first memory location in the common memory area and outside the first allocated function data memory region; and
to deny the first memory access request.

2. The computational storage device of claim 1, wherein:
the first allocated function data memory region is for read operations; and
the first memory access request is a read access request.

3. The computational storage device of claim 1 or 2, wherein the first request further defines a second allocated function data memory region, for the first compute function, for write operations.

4. The computational storage device of claim 3, wherein the controller circuit is configured:
to receive a second memory access request, from the first compute function, for a second memory location in the common memory area and outside the first allocated function data memory region; and
to approve the second memory access request.

5. The computational storage device of claim 4, wherein:
the second memory access request is a write access request, and
the second memory location is within the second allocated function data memory region.

6. The computational storage device of claim 5, wherein:
the first request further defines a third allocated function data memory region, for the second compute function, for read operations; and
the third allocated function data memory region overlaps the second allocated function data memory region in an overlapping portion of the third allocated function data memory region.

7. The computational storage device of claim 6, wherein the controller circuit is further configured:
to receive a third memory access request, from the first compute function, for a third memory location in the overlapping portion of the third allocated function data memory region; and
to approve the third memory access request,
wherein the third memory access request is a write access request.

8. The computational storage device of claim 6 or 7, wherein the controller circuit is further configured:
to receive a fourth memory access request, from the second compute function, for a fourth memory location in the overlapping portion of the third allocated function data memory region; and
to approve the fourth memory access request,
wherein the fourth memory access request is a read access request.

9. The computational storage device of any one of claims 6 to 8, wherein the controller circuit is further configured:
to receive a fifth memory access request, from the second compute function, for a fifth memory location in the overlapping portion of the third allocated function data memory region; and
to deny the fifth memory access request,
wherein the fifth memory access request is a write access request.

10. The computational storage device of any one of claims 1 to 9, wherein the controller circuit is configured to maintain a table of access permissions, the table including read and write access permissions for the first compute function.

11. The computational storage device of any one of claims 1 to 10, wherein the controller circuit is further configured to receive an identifying tag from the host, and to acknowledge receipt of the identifying tag.

12. The computational storage device of claim 11, wherein the controller circuit is further configured:
to compare a subset of a plurality of bits of a logical block address of the first request to the identifying tag; and
to determine that the subset of the plurality of bits matches the identifying tag.

13. The computational storage device of claim 11 or 12, wherein the controller circuit is further configured:
to receive a second request from the host;
to compare a subset of a plurality of bits of a logical block address of the second request to the identifying tag;
to determine that the subset of the plurality of bits does not match the identifying tag; and
to return an error code to the host.

14. A method, comprising:
receiving, by a computational storage device, a first request from a host, the first request defining a first allocated function data memory region, for a first compute function of a first application of the computational storage device, the first application comprising the first compute function and a second compute function;
receiving, by a controller circuit of the computational storage device, a first memory access request, from the first compute function, for a first memory location in a common memory area of the computational storage device and outside the first allocated function data memory region; and
denying the first memory access request.

15. The method of claim 14, wherein:
the first allocated function data memory region is for read operations; and
the first memory access request is a read access request.
